# EUROPÄISCHE PATENTSCHRIFT

(11) **EP 0 742 797 B1**
(45) Veröffentlichungstag und Bekanntmachung des Hinweises auf die Patenterteilung: **11.08.1999**
(21) Anmeldenummer: 95907584.7
(22) Anmeldetag: 23.01.1995
(51) Int. Cl.: C08B 37/00, C08B 31/18, C08B 15/04, C11D 3/22

(54) **WIRBELSCHICHT-OXIDATIONSVERFAHREN ZUR HERSTELLUNG VON POLYCARBOXYLATEN AUF POLYSACCHARID-BASIS**
FLUIDIZED-BED OXIDATION METHOD FOR THE PRODUCTION OF POLYCARBOXYLATES BASED ON POLYSACCHARIDES
PROCEDE D'OXYDATION EN LIT FLUIDISE POUR LA FABRICATION DE POLYCARBOXYLATES A BASE DE POLYSACCHARIDES

(30) Priorität: 31.01.1994 DE 4402851
(43) Veröffentlichungstag der Anmeldung: 20.11.1996
(73) Patentinhaber: Henkel Kommanditgesellschaft auf Aktien, 40191 Düsseldorf (DE)
(72) Erfinder: ENGELSKIRCHEN, Konrad, D-40668 Meerbusch (DE); FISCHER, Herbert, D-40229 Düsseldorf (DE); JÜTTNER, Werner, D-40627 Düsseldorf (DE); VERHOLT, Hans-Wilhelm, D-40764 Langenfeld (DE); MÖLLER, Thomas, D-40593 Düsseldorf (DE)
(86) Internationale Anmeldenummer: EP9500227
(87) Internationale Veröffentlichungsnummer: WO9520608

(56) Entgegenhaltungen:
- WO-A-93/16110
- WO-A-94/28030
- DE-C- 941 282
- FR-A- 1 179 539
- FR-A- 2 291 788
- US-A- 2 472 590
- W. BRöTZ: "Grundriss der chemischen Verfahrenstechnik, 1958, 117-120" , , VERLAG CHEMIE GMBH, WEINHEIM/DEUTSCHLAND

## Beschreibung

Die Erfindung betrifft ein Verfahren zur Herstellung von Polycarboxylaten durch selektive Oxidation von Polysacchariden mit Stickstoffdioxid in der Wirbelschicht.

Zur Herstellung von Polycarboxylaten durch oxidative Behandlung von Polysacchariden, beispielsweise Cellulose, Stärke und Dextrinen, besteht umfangreiches Wissen. Verwiesen wird beispielsweise auf Houben-Weyl "Methoden der organischen Chemie", Thieme-Verlag, Stuttgart (1987) Bd. E 20, Makromolekulare Stoffe, hier das Unterkapitel "Polysaccharid-Derivate" bearbeitet von Dr. K. Engelskirchen, a.a.O. Seite 2042 ff, insbesondere Seite 2124 ff (Oxidationsprodukte der Cellulose) und Seite 2166 ff (Oxidierte Stärken). Verwiesen sei weiter auf die Veröffentlichung "Cellulose Chemistry and Its Applications" (1983), John Wiley & Sons, Chichester, GB, dort insbesondere T.P.Nevell, "Oxidation of Cellulose" (Kapitel 10) sowie die umfangreiche dort zitierte Literatur, a.a.O Seite 262 bis 265.

Grob zusammenfassend gilt: Eine Vielzahl von Oxidationsmitteln ist für die Oxidation von Polysacchariden, insbesondere von ausschließlich aus Glucose aufgebauten Polyglucosanen gebräuchlich. Genannt seien beispielsweise (Luft)-Sauerstoff, Wasserstoff-Peroxid, Natriumhypochlorit beziehungsweise -bromit, Periodsäure beziehungsweise Periodate, Blei(IV)-Acetat, Stickstoffdioxid und Cer(IV)-Salze. Diese Oxidationsmittel reagieren sehr unterschiedlich mit den Anhydroglucoseeinheiten, vgl. beispielsweise die Formelbilder in Houben-Weyl a.a.O. Seite 2124. So bewirken beispielsweise Perjodate oder Blei(IV)-Acetat eine C-C Spaltung der Anhydroglucose-Ringe; man erhält aus Cellulose die sogenannte 2,3-Dialdehydcellulose und analog aus Stärke Dialdehydstärke. Bekannt ist außerdem, daß bei der Einwirkung von Stickstoffdioxid auf Cellulose die Oxidation der primären Alkoholgruppe zur Carboxylgruppe die weit überwiegende Reaktion ist. Das Oxidationsmittel, in der Regel im Gleichgewicht mit Distickstofftetroxid vorliegend, kann dabei gasförmig oder gelöst in einem inerten organischen Lösungsmittel eingesetzt werden, vgl. auch hier Houben-Weyl a.a.0. Seite 2125 und die dort in diesem Zusammenhang genannte Primärliteratur. Auch von der Stärke ausgehend lassen sich entsprechend weitgehend selektive Oxidationen der primären Alkoholgruppe der Anhydroglucoseeinheiten zur Carboxylgruppe bewerkstelligen. So ist aus der US-amerikanischen Patentschrift US 2 472 590 die Oxidation von Stärke mit gasförmigem oder in Wasser beziehungsweise in verschiedenen organischen Lösungsmitteln gelöstem Stickstoffdioxid bei Raumtemperatur und Normaldruck bekannt. Unter diesen Bedingungen erhält man die annähernd vollständige Umwandlung der primären Alkoholgruppen der Polysaccharide in Carboxylgruppen erst nach sehr langen Reaktionszeiten, die unter Umständen bis zu mehreren Tagen betragen können. Außerdem werden bei den bekannten Verfahren hohe Stickstoffdioxidmengen, bezogen auf zu oxidierendes Polysaccharid, benötigt.

Aus der internationalen Patentanmeldung WO 93/16110 sind Verfahren zur Herstellung von Polycarboxylaten durch Oxidation von Polysacchariden mittels gasförmigem Stickstoffdioxid bekannt, die in Abwesenheit von Suspensions- oder Lösungsmitteln durchgeführt werden können. Dies kann sich auch auf ein Wirbelschichtverfahren beziehen. Die vorliegende Erfindung geht von der Aufgabe aus, ein Wirbelschicht-Oxidationsverfahren für Polysaccharide so zu realisieren, daß technisch zuverlässig Oxidationsprodukte mit gleichbleibender Qualität erhalten werden können, da die entstehenden Polycarboxylate als potentielle Builder- beziehungsweise Co-Builder-Komponenten für Wasch- und Reinigungsmittel in Frage kommen. Dies gilt auch für die Salze derartiger Polycarboxylate, insbesondere ihre wasserlöslichen Salze, da der Einsatz von oxidierten Polysaccharidverbindungen zur Waschkraftverstärkung von Wasch- und/oder Reinigungsmitteln an sich seit Jahrzehnten bekannt und immer wieder untersucht worden ist. Verwiesen wird in diesem Zusammenhang beispielsweise auf die niederländische Patentschriften NL 69 883 und NL 78 087. Der Ersatz von Builder-Systemen auf Phosphatbasis durch mit Lewis-Säuren behandelter 6-Carboxycellulose wird in den US-amerikanischen Patentschriften US 3 740 339 und US 3 790 561 beschrieben. Auch die niederländische Patentanmeldung NL 70/02 500 will oxidierte Polysaccharid-Derivate als Builder-System zur Steigerung der Waschkraft in insbesondere Textilwaschmitteln einsetzen.

Die erfindungsgemäße Lehre geht von der überraschenden Erkenntnis aus, daß Polycarboxylate aus Polysacchariden in einem einfachen Verfahren kostengünstig in hohen Ausbeuten zu gewinnen sind, wenn die Oxidationsreaktion in der Wirbelschicht mit einem Wirbelmittel, das gasförmiges Stickstoffdioxid enthält, in bestimmten Druck- und Temperaturbereichen durchgeführt wird. Die Formulierung "gasförmiges Stickstoffdioxid" umfaßt dabei auch das unter den jeweiligen Reaktionsbedingungen vorliegende Gleichgewichtsgemisch aus Stickstoffdioxid und seinem Dimeren Distickstofftetroxid. Mengenangaben an Stickstoffdioxid jedoch bedeuten die Mengen, die sich bei rechnerisch vollständigem Verschieben des Stickstoffdioxid-Distickstofftetroxid-Gleichgewichts auf die Seite des Stickstoffdioxids ergeben.

Gegenstand der Erfindung ist dementsprechend ein Verfahren zur Herstellung von Polycarbonsäuren oder deren Salzen aus Polysacchariden unter Umwandlung zumindest eines Teils, vorzugsweise mindestens 15 %, insbesondere 25 % bis 100 % der primären Alkoholgruppen der Polysaccharide in Carboxylgruppen sowie gegebenenfalls wenigstens anteilsweiser Neutralisation der entstehenden Carbonsäuregruppen durch Oxidation in einer Wirbelschicht, deren Wirbelmittel ein Stickstoffdioxid-haltiges Gas ist, welches dadurch gekennzeichnet ist, daß man die Reaktion bei Drucken von 0,5 bar bis 12 bar und einer Temperatur im Bereich vom Siedepunkt des Stickstoffdioxids unter dem jeweiligen Druck bis 160 °C führt und Stickstoffdioxid, bezogen auf zu oxidierende Alkoholgruppen und summiert über die Reaktionszeit, in einer Menge von mindestens 2 Molequivalenten einsetzt, und man das Wirbelmittel im Kreis fürht sowie eine Reoxidation des Stickstoffdioxids in einer zweiten Reaktionszone des Kreislaufsystems vornimmt, dadurch gekennzeichnet, daß man mehrere Wirbelschichtreaktoren hintereinanderschaltet, wobei sich Wirbelschichtreaktoren mit Stellen zur Reoxidation des Stickstoffdioxids abwechseln.

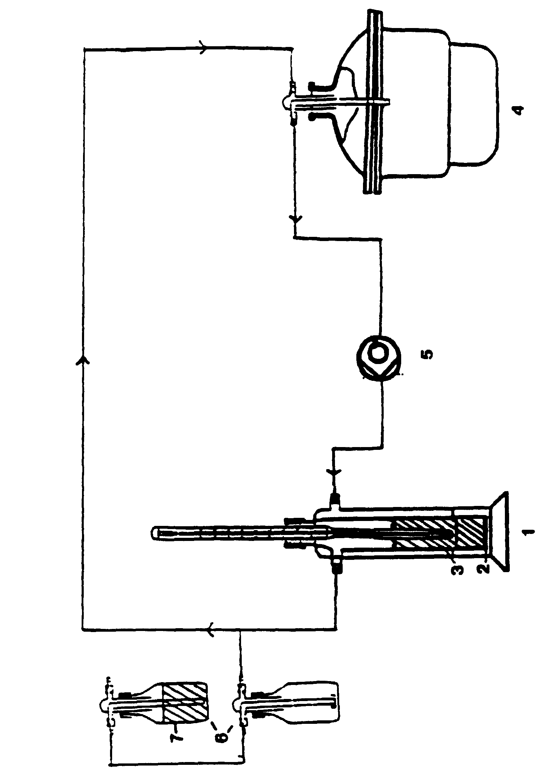

Unter Wirbelschicht soll dabei - ohne auf diese Art der Erzeugung beschränkt zu sein - die Erscheinung verstanden werden, die zu beobachten ist, wenn auf waagrechten, perforierten Böden lagerndes feinkörniges Schüttgut von unten von Gasen, als Wirbelmittel bezeichnet, durchströmt wird. In diesem Zusammenhang sei auf das Werk von D. Kunii und O. Levenspiel, Fluidization Engineering, Verlag Butterworth-Heinemann, 2. Auflage 1991, dort insbesondere die Tabelle auf den Seiten 8 und 9 sowie das Kapitel 3, verwiesen. Ein brauchbarer Reaktor für das erfindungsgemäße Verfahren ist auch die im europäischen Patent EP 051 147 B1 offenbarte Vorrichtung (Figur 1), bei der sich ein gasdurchströmtes Wirbelbett in einem Zylinder befindet, in dem eine mit Rührarmen ausgerüstete Welle rotiert.

Möglich ist auch der Einsatz eines Reaktors mit mehrstufiger Wirbelschicht, wie in Beránek/Rose/Winterstein, Grundlagen der Wirbelschichttechnik, Krauskopf-Verlag, 1975, Seite 72 beschrieben. Mit einer solchen Vorrichtung ist die kontinuierliche Reaktionsführung leicht möglich.

Das Wirbelmittel wird im Kreis geführt. Falls bei Kreislaufführung des Wirbelmittels nicht bereits von vorneherein ausreichende Mengen an Stickstoffdioxid in das Reaktionssystem eingebracht worden sind, kann es in den Kreislauf nachdosiert werden, was vorzugsweise verbrauchsabhängig geschieht. Summiert über die Reaktionszeit ist Stickstoffdioxid vorzugsweise in einer Menge von 3 Molequivalenten bis 50 Molequivalenten, insbesondere von 4 Molequivalenten bis 20 Molequivalenten, bezogen auf zu oxidierende Alkoholgruppen, im Reaktionssystem enthalten. In der Regel ist bei deren Einsatz vollständige Umwandlung der primären Alkoholgruppen in Carboxylgruppen innerhalb von 2 bis 3 Stunden zu erreichen. Es ist jedoch auch die Unterschreitung der genannten Molequivalentmengen bis hinunter zu 2 Molequivalenten leicht möglich.

Die Konzentration des Stickstoffdioxids im Wirbelmittel ist unkritisch, in einem Extremfall kann das gesamte Wirbelmittel aus Stickstoffdioxid bestehen. Im anderen Extremfall reicht theoretisch ein einziges Molekül Stickstoffdioxid aus, um die gewünschte Reaktion in beliebigen Maßstäben durchzuführen, wenn dieses nach seiner Umsetzung mit dem Polysaccharid im Kreis geführt und dabei reoxidiert wird. Die Reoxidation kann in einer zweiten Reaktionszone des Kreislaufsystems geschehen, beispielsweise dadurch, daß man das Wirbelmittel durch ein partikelförmiges festes, an ein festes Trägermaterial adsorbiertes oder in Flüssigkeiten gelöstes sauerstoffübertragendes Oxidationsmittel leitet. Beispielsweise ist die Reoxidation mit Hilfe eines V₂O₅-Katalysators, der mit Hilfe von Sauerstoff regeneriert werden kann, möglich. Die Reoxidation kann auch "in-situ" durch Zusetzen eines gasförmigen, sauerstoffübertragenden Oxidationsmittels, insbesondere Sauerstoff und/oder Ozon, zum Wirbelmittel vorgenommen werden.

In den Fällen, in denen das Wirbelmittel nicht ausschließlich aus Stickstoffdioxid besteht, enthält es gasförmiges, sauerstoffübertragendes Oxidationsmittel zur Regeneration des Stickstoffdioxids und/oder Inertgas. Als inerte, das heißt bei den jeweils gewünschten Verfahrensbedingungen nicht reagierende Gase können Edelgase wie Helium oder Argon und Kohlendioxid, insbesondere aber Stickstoff, aber auch beliebige Mischungen derartiger Gase eingesetzt werden. Auch die Anwesenheit von die beabsichtigte Oxidationsreaktion nicht wesentlich beeinflussenden Stickoxiden, wie Stickstoffmonoxid und Distickstoffdioxid, ist möglich. Vorzugsweise beträgt die Konzentration an Stickstoffdioxid in derartigen Wirbelmitteln 10 Vol.-% bis 98 Vol.-%, insbesondere 20 Vol.-% bis 90 Vol.-%. Diese Konzentrationen beziehen sich insbesondere auf die Ausführung des Verfahrens bei Normaldruck. Die Strömungsgeschwindigkeit des Wirbelmittels ist so zu wählen, daß sich eine Wirbelschicht des Polysaccharids ausbildet, sie liegt vorzugsweise in der Größenordnung von 2 bis 10 Liter pro Stunde pro cm² des Bodens, über dem sich die Wirbelschicht ausbildet. Wenn in einer Ausgestaltung des erfindungsgemäßen Verfahrens unter Kreislaufführung des Wirbelmittels die Menge gleichzeitig anwesenden Stickstoffdioxids die oben angegebene, über die Reaktionszeit summierte Mindestmenge unterschreitet, wird vorzugsweise gasförmiges, sauerstoffübertragendes Oxidationsmittel zur Regeneration des Stickstoffdioxids verwendet. Vorzugsweise werden dazu Mischungen aus Inertgas mit Sauerstoff eingesetzt, wobei der Sauerstoffgehalt in der Gasmischung 1 Vol.-% bis 30 Vol.-%, insbesondere 3 Vol.-% bis 10 Vol.-% beträgt. Eine bevorzugte Ausführungsform des erfindungsgemäßen Verfahrens beinhaltet die Zuführung von Sauerstoff durch das Zugeben von Luft. Das gasförmige, sauerstoffübertragende Oxidationsmittel kann in seiner Gesamtmenge zu Beginn beziehungsweise vor der Reaktion in das im Kreis geführte Gas gegeben werden oder kontinuierlich beziehungsweise in Teilen, je nach Verbrauch durch die Regeneration des Stickstoffdioxids, dosiert werden.

Die benötigte Reaktionszeit hängt bei gegebenem Polysaccharid und Stickstoffdioxidgehalt im Wirbelmittel im wesentlichen von dem gewünschten Oxidationsgrad und der Temperatur ab. Als Richtwerte können folgende Angaben dienen: Bei einer Temperatur von 50 °C und Normalddruck unter Einsatz von 12 Molequivalenten Stickstoffdioxid pro Stunde, bezogen auf zu oxidierende Hydroxylgruppen, werden nach 30 Minuten 18 % bis 22 %, nach 60 Minuten 60 % bis 70 % und nach 1,5 Stunden 85 % bis 95 % der primären Alkoholgruppen in Carboxylgruppen umgewandelt.

Das Hintereinanderschalten mehrerer Wirbelschichtreaktoren ermöglicht es daß das stickstoffdioxidhaltige Wirbelmittel, gegebenenfalls unter Zuführung weiteren Stickstoffdioxids, nach Verlassen des ersten Reaktors einen oder mehrere weitere Reaktoren durchströmt. Die Wirbelschichtreaktoren wechseln sich mit Stellen zur Reoxidation des Stickstoffdioxids ab.

Vorzugsweise wird das erfindungsgemäße Verfahren bei einem Druck im Bereich von 0,8 bar bis 9 bar, insbesondere von 1 bar bis 3 bar durchgeführt.

Für das erfindungsgemäße Verfahren ist die Natur des eingesetzten Polysaccharids weitgehend unkritisch. Voraussetzungen sind lediglich, daß es primäre Alkoholgruppen enthaltende Kohlenhydrateinheiten enthält und in einer Form vorliegt, welche die Ausbildung einer Wirbelschicht zuläßt, insbesondere in Pulverform. In Frage kommen native Polyglucane, insbesondere Stärke und/oder Cellulose, aber auch andere Polysaccharide, zum Beispiel Polygalactomannane wie Guaran und Carubin. Die Polysaccharide können auch in chemisch oder physikalisch modifizierter Form verwendet werden, sofern sie noch oxidierbare primäre Alkoholgruppen enthalten. Wegen der mit diesen besonders glatt ablaufenden Reaktion und aus wirtschaftlichen Gründen sind Stärken unterschiedlicher Provenienz, insbesondere Kartoffelstärke, Weizenstärke, Maisstärke und/oder Tapiokastärke, wie sie als übliche Pulver im Handel sind, bevorzugt. Da Cellulose wegen ihrer Faserigkeit oft Probleme bei der Ausbildung einer Wirbelschicht bereitet, wird sie vorzugsweise in Form von Mikropulver eingesetzt.

Die Oxidationsreaktion des erfindungsgemäßen Verfahrens wird insbesondere unter Einsatz der genannten Polyglucane vorzugsweise über einen solchen Zeitraum geführt, daß das Oxidationsprodukt im statistischen Mittel zu wenigstens 15 Mol-% aus oxidierten Anhydroglucoseeinheiten der Formel I 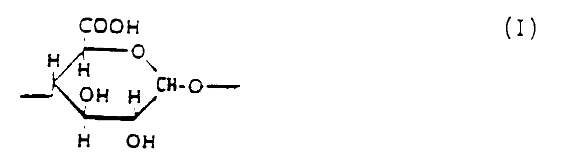 besteht, was einem Carboxylgruppengehalt von mindestens 4 Gew.-% entspricht.

Durch ein erfindungsgemäßes Verfahren erhält man Polycarboxylate auf Polyglucan-Basis, welche die oxidierten Anhydroglucoseeinheiten insbesondere der Formel I vorzugsweise zu wenigstens 25 Mol-%, insbesondere zu wenigstens 35 Mol-% im Molekül enthalten, wobei als weiterer Vorteil keine wesentlichen Mengen anderer Oxidations-Folgeprodukte vorliegen. Die Obergrenze des Gehaltes an Einheiten gemäß Formel I liegt bei 100 Mol-%, insbesondere bei etwa 95 Mol-%. Bevorzugt werden durch das erfindungsgemäße Verfahren Polycarboxylate hergestellt, welche Einheiten gemäB Formel I im Bereich von 70 Mol-% bis 100 Mol-%, entsprechend einem Carboxylgruppengehalt von bis zu ca. 25 Gew.-%, aufweisen.

Im Falle daß das zu oxidierende Polysaccharid zur Agglomeration und zur in der Fließbetttechnik gefürchteten Kanalbildung neigt, kann sein Fließverhalten durch den Zusatz geringer Mengen von insbesondere festen Additiven, zu denen beispielsweise Magnesiumoxid, Calciumfluorid, Calciumphosphat oder Kieselgel, insbesondere das unter dem Namen Aerosil^{(R)} vertriebene Siliziumdioxid gehören, signifikant verbessert werden. In dieser Hinsicht hohe Effekte werden bereits beim Einsatz niedriger Additivmengen von vorzugsweise 0,1 Gew.-% bis 5 Gew.-%, insbesondere 0,25 Gew.-% bis 1 Gew.-%, jeweils bezogen auf zu oxidierendes·Polysaccharid, erreicht. Das eingesetzte Polysaccharid enthält vorzugsweise nicht mehr als 15 Gew.-%, insbesondere nicht mehr als 10 Gew.-% Wasser.

Zur Illustration der Ausgestaltung des erfindungsgemäßen Verfahrens unter Kreislaufführung des Wirbelmittels sei auf Figur 1 verwiesen. Diese zeigt einen mit einer Filterplatte (2) versehenen temperierbaren Reaktor (1), in dem sich das zu oxidierende Polysaccharid (3) befindet. Über eine Pumpe (5) wird das stickstoffdioxidhaltige Wirbelmittel aus einem Vorratsbehälter (4) durch den Reaktor (1) und im Kreis zurück gepumpt. In den Wirbelmittelkreislauf, beispielsweise dem Reaktor (1) nachgeschaltet, können Flaschen zum Druckausgleich (6) geschaltet werden, die mittels einer Sperrflüssigkeit (7) den gewünschten Reaktionsdruck aufrechterhalten. Vorteilhafterweise ist ein beheizter Gasauslaß zur Vermeidung der Wasser-Kondensation im Reaktor vorhanden.

Nach der Oxidationsreaktion kann das Reaktionsgemisch in Wasser aufgenommen und über Wasserwasch- und Filtrationsprozesse gereinigt und in fester Form isoliert werden. Ein erheblicher Teil der bei Reaktionsende im Reaktionssystem vorliegenden Stickoxide kann über Entgasungsprozesse entfernt werden; so führt im Regelfall bereits eine einfache Vakuumbehandlung der Reaktionsmischung ohne wäßrige Aufarbeitung zu Produkten mit akzeptabel niedrigen Nitrit- und Nitratgehalten.

Im Anschluß an die Oxidationsreaktion und die gewünschtenfalls vorgenommene Aufarbeitung ist es möglich, wenigstens einen Teil der Carboxylgruppen des Oxidationsprodukts durch Behandeln mit einem basischen Reagenz zu neutralisieren, das heißt von der Säure- in die Salzform zu überführen. Als Neutralisationsmittel wird vorzugsweise eine wäßrige Lösung, die Alkalihydroxid, Ammoniumhydroxid und/oder organische Base enthält, verwendet. Auch direkt im Anschluß an die Oxidationsreaktion ist die Neutralisation möglich, beispielsweise durch Begasen des Reaktionsgefäßes mit Ammoniak. Die Salzbildung ist auch unter reduzierenden Bedingungen, beispielsweise unter Verwendung von Natriumborhydrid, möglich. Vorzugsweise wird das Neutralisationsmittel in solchen Mengen eingesetzt, daß sämtliche Carboxylgruppen des Oxidationsprodukts in die Salzform überführt werden. Dabei ist sowohl die Zugabe des Oxidationsproduktes zum Neutralisationsmittel als auch die Zugabe des Neutralisationsmittels zum Oxidationsprodukt möglich. Die Salzbildung kann auch unter den Bedingungen der Anwendung beziehungsweise Weiterverarbeitung der Polycarboxylate in deren Säureform erfolgen, beispielsweise bei der Herstellung oder dem Einsatz von Wasch- oder Reinigungsmitteln durch übliche alkalische Bestandteile derartiger Mittel.

Die nach dem erfindungsgemäßen Verfahren hergestellten Polycarboxylate werden vorzugsweise als Builder oder Co-Builder in Wasch- oder Reinigungsmitteln verwendet. In derartigen Mitteln werden sie vorzugsweise als Co-Builder in Mengen von 0,5 Gew.-% bis 10 Gew.-%, insbesondere 2 Gew.-% bis 7 Gew.-%, bezogen jeweils auf das Gesamtgewicht des Mittels, die anorganischen Builder als Haupt-Builder enthalten, verwendet. Besonders bevorzugt werden sie in letztgenannten Mitteln verwendet, die Zeolith-NaA, wie er beispielsweise im Zusammenhang mit Textilwaschmitteln in der deutschen Patentschrift DE 24 12 837 beschrieben ist, und/oder Schichtsilikate, wie sie in der europäischen Patentanmeldung EP 164 514 beschrieben sind, als Haupt-Builder und erfindungsgemäß hergestellte Polycarbonsäuren oder deren Salze in Mengenverhältnissen von 2:1 bis 5:1 enthalten. Die Zusammensetzung der Wasch-und/oder Reinigungsmittel kann ansonsten im Rahmen bekannter Rezepturen praktisch beliebig gewählt werden.

### Beispiele

### Beispiel 1:

In der in Figur 1 dargestellten Apparatur wurde Stärke (3) oxidiert. 67,5 Gew.-Teile Kartoffelstärke, Feuchtigkeitsgehalt 4 Gew.-%, wurden mit 0,5 Gew.-% Aerosil^{(R)} gemischt und in den Reaktor (1) gefüllt (Höhe 60 cm, ø 40 mm). Im Vorratsbehälter (4) befanden sich 50 Gew.-Teile N₂O₄/NO₂ (Gleichgewichtsgemisch bei Raumtemperatur). Aus dem Gasraum des Vorratsbehälters wurde Stickstoffdioxid mit einer Pumpe (5) mit einer zur Fluidisierung ausreichenden Geschwindigkeit durch die Stärke in den Vorratsbehälter zurückgepumpt. Durch Eintauchen des Reaktors (1) in ein Heizbad wurde die Temperatur im Fließbett auf 50 °C eingestellt. Bei dieser Temperatur wurde das Stickstoffdioxid 5 Stunden lang im Kreislauf geführt. Anschließend wurden die Schlauchverbindungen zwischen Reaktor (1) und Vorratsbehälter (4) sowie zwischen der Pumpe (5) und dem Vorratsbehälter (4) gelöst. Mittels der Pumpe (5) wurde dann Luft zum Abkühlen des Reaktiongutes und zum Ausblasen von Stickoxiden durch das Oxidationsprodukt geführt. Das Produkt wurde mit Wasser nitrit- und nitratfrei gewaschen, anschließend entwässert und bei 50 °C im Vakuum getrocknet. Erhalten wurde eine Polycarbonsäure als weißes, frei fließendes Pulver. Zur Bestimmung der Säurezahl wurde die Polycarbonsäure in überschüssiger ethanolischer Kalilauge gelöst und der Laugenüberschuß nach 20 Stunden mit Salzsäure zurücktitriert. Die Angabe der Säurezahl erfolgt in Milligramm KOH pro Gramm Polysaccharid-Oxidat. Das Produkt wies eine Säurezahl von 260 auf, was einem durchschnittlichen Gehalt von etwa 0,8 Carboxylgruppen pro Anhydroglucoseinheit entspricht.

### Beispiel 2:

Der Reaktor des Beispiels 1 wurde an der Gaseintrittsseite an ein Vorratsgefäß für flüssiges Distickstoffdioxid und an der Gasaustrittsseite an zwei hintereinander geschaltete, mittels eine Kohlendioxid/Aceton-Kältemischung gekühlte Kühlfallen angeschlossen. Der Reaktor wurde mit einer Mischung aus 60 Gew.-Teilen Kartoffelstärke und 0,6 Gew.-Teilen Aerosil^{(R)} beschickt. In das Vorratsgefäß wurden 100 Gew.-Teile flüssiges Distickstofftetroxid gefüllt. Durch den Gasraum des mit Eiswasser gekühlten Vorratsgefäßes wurde Luft, die sich dabei mit Stickstoffdioxid anreicherte, in den Reaktor mit einer für die Fluidisierung der Stärke ausreichenden Strömungsgeschwindigkeit geleitet. Aus dem den Reaktor verlassenden Gasstrom wurde nicht umgesetztes Stickstoffdioxid in den Kühlfallen auskondensiert. Die fluidisierte Stärke wurde durch Außenbeheizung des Reaktors auf 50 °C erwärmt. Bei dieser Temperatur wurde der Gasstrom 5 Stunden lang durch das Fließbett geführt. Anschließend wurde wie unter Beispiel 1 beschrieben aufgearbeitet. Das als weißes Pulver resultierende Produkt hatte eine Säurezahl von 154, entsprechend einem durchschnittlichen Gehalt von etwa 0,46 Carboxylgruppen pro Anhydroglucoseeinheit.

### Beispiel 3:

Die Oxidation der Stärke wurde in einer zylindrischen, mit einer für Gase durchlässigen porösen Bodenplatte versehenen Glasapparatur durchgeführt, die zu Zwecken der Wärmezufuhr oder -abfuhr mit einem zweiten Mantel umgeben war, durch welchen ein Heiz-/Kühlmedium gepumpt werden konnte. 51,4 Gew.-Teile Weizenstärke mit einen Wassergehalt von 5 Gew.-% wurden mit 1 Gew.-% Aerosil gemischt und in den Reaktor gefüllt. Die Stärke wurde mit einem für eine Fluidisierung ausreichenden Stickstoffstrom durchströmt und auf eine Temperatur von 48 °C erwärmt. Danach wurde das Fließbett mit einem NO₂/N₂O₄-Gasstrom bei einer Durchflußmenge von 50 Volumenteilen pro Stunde beaufschlagt und die Stickstoffmenge auf 5 Volumenteile pro Stunde reduziert. Die Reaktionstemperatur wurde auf 50 °C eingeregelt. Nach zwei Stunden wurde die NO₂/N₂O₄-Zufuhr beendet und Stickoxide wurden aus der oxidierten Stärke mittels eines Stickstoffstromes ausgetrieben. Das Rohprodukt wurde wie im Beispiel 1 angegeben aufgearbeitet. Das Produkt hatte eine Säurezahl von 334, die einem durchschnittlichen Gehalt von ca. 1,04 Carboxylgruppen pro Anhydroglucoseeinheit entspricht.

### Beispiele 4 bis 9:

Wie im Beispiel 3 beschrieben, wurde unter den in der nachfolgenden Tabelle beschriebenen Bedingungen Stärke oxidiert und aufgearbeitet. Angegeben ist auch der Gehalt an Carboxylgruppen, charakterisiert durch die Säurezahl, in Abhängigkeit von der Reaktionszeit.

| Nr. | Stärke [g] | Temperatur [°C] | NO₂ [l/h] | N₂ [l/h] | Zeit [min] | Säurezahl |
|---|---|---|---|---|---|---|
| 4 | 51,4 | 50 | 60 | - | 40 | 95 |
| | | | | | 70 | 190 |
| | | | | | 100 | 260 |
| | | | | | 130 | 310 |
| | | | | | 160 | 329 |
| | | | | | 190 | 359 |
| 5 | 51,4 | 50 | 50 | 5 | 40 | 56 |
| | | | | | 100 | - |
| | | | | | 130 | 334 |
| | | | | | 160 | - |
| | | | | | 190 | 373 |
| | | | | | 220 | 388 |
| 6 | 50,9 | 50 | 50 | 5 | 35 | 64 |
| | | | | | 65 | 210 |
| | | | | | 95 | 284 |
| | | | | | 125 | 335 |
| | | | | | 180 | 360 |
| 7 | 50,9 | 50 | 40 | 20 | 40 | 19 |
| | | | | | 70 | 60 |
| | | | | | 100 | 140 |
| | | | | | 130 | 219 |
| | | | | | 160 | 284 |
| | | | | | 190 | 313 |
| 8 | 101,8 | 50 | 40 | 10 | 55 | 26 |
| | | | | | 85 | 168 |
| | | | | | 115 | 244 |
| | | | | | 145 | 297 |
| | | | | | 190 | 320 |
| 9 | 50,9 | 50 | 20 | 4 | 24 | 6 |
| | | | | | 54 | 78 |
| | | | | | 84 | 198 |
| | | | | | 114 | 268 |
| | | | | | 144 | 318 |
| | | | | | 200 | 330 |

### Bezugszeichenliste:

1 Reaktor
2 Filterplatte
3 Polysaccharid
4 Vorratsbehälter
5 Pumpe
6 Druckausgleich
7 Sperrflüssigkeit

## Patentansprüche

1. Verfahren zur Herstellung von Polycarbonsäuren oder deren Salzen aus Polysacchariden unter Umwandlung zumindest eines Teils der primären Alkoholgruppen der Polysaccharide in Carboxylgruppen bei Drucken von 0,5 bar bis 12 bar und einer Temperatur im Bereich vom Siedepunkt des Stickstoffdioxids unter dem jeweiligen Druck bis 160 °C sowie gegebenenfalls wenigstens anteilsweiser Neutralisation der entstehenden Carbonsäuregruppen durch Oxidation in einer Wirbelschicht, deren Wirbelmittel ein Stickstoffdioxid-haltiges Gas ist, wobei man das Stickstoffdioxid, bezogen auf zu oxidierende Alkoholgruppen und summiert über die Reaktionszeit, in einer Menge von mindestens 2 Molequivalenten einsetzt, und man das Wirbelmittel im Kreis führt sowie eine Reoxidation des Stickstoffdioxids in einer zweiten Reaktionszone des Kreislaufsystems vornimmt, dadurch gekennzeichnet, daß man mehrere Wirbelschichtreaktoren hintereinanderschaltet, wobei sich Wirbelschichtreaktoren mit Stellen zur Reoxidation des Stickstoffdioxids abwechseln.

2. Verfahren nach Anspruch 1, dadurch gekennzeichnet, daß man mindestens 15 % der primären Alkoholgruppen der Polysaccharide in Carboxylgruppen umwandelt.

3. Verfahren nach Anspruch 1 oder 2, dadurch gekennzeichnet, daß man Stickstoffdioxid, bezogen auf zu oxidierende Alkoholgruppen und summiert über die Reaktionszeit, in einer Menge von 3 Molequivalenten bis 50 Molequivalenten einsetzt.

4. Verfahren nach einem der Ansprüche 1 bis 3, dadurch gekennzeichnet, daß man 25 % bis 100 % der primären Alkoholgruppen der Polysaccharide in Carboxylgruppen umwandelt und/oder Stickstoffdioxid, bezogen auf zu oxidierende Alkoholgruppen und summiert über die Reaktionszeit, in einer Menge von 4 Molequivalenten bis 20 Molequivalenten einsetzt.

5. Verfahren nach einem der Ansprüche 1 bis 4, dadurch gekennzeichnet. daß das Wirbelmittel gasförmiges, sauerstoffübertragendes Oxidationsmittel und/oder Inertgas enthält.

6. Verfahren nach Anspruch 5, dadurch gekennzeichnet, daß die Konzentration an Stickstoffdioxid 10 Vol.-% bis 98 Vol.-% beträgt.

7. Verfahren nach einem der Ansprüche 1 bis 6, dadurch gekennzeichnet, daß das Wirbelmittel als gasförmiges, sauerstoffübertragendes Oxidationsmittel Sauerstoff und/oder als Inertgas Stickstoff enthält und/oder die Konzentration an Stickstoffdioxid 20 Vol.-% bis 90 Vol.-% beträgt.

8. Verfahren nach einem der Ansprüche 1 bis 7, dadurch gekennzeichnet, daß man es bei einem Druck im Bereich von 0,8 bar bis 9 bar durchführt.

9. Verfahren nach einem der Ansprüche 1 bis 8, dadurch gekennzeichnet, daß man als zu oxidierendes Polysaccharid Stärke einsetzt.

10. Verfahren nach einem der Ansprüche 1 bis 9, dadurch gekennzeichnet, daß man es über einen solchen Zeitraum führt, daß das Oxidationsprodukt im statistischen Mittel zu wenigstens 15 Mol-% aus oxidierten Anhydroglucoseeinheiten der Formel I 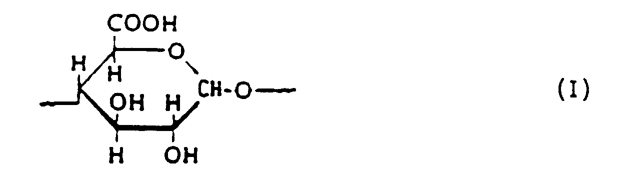 besteht.

11. Verfahren nach Anspruch 10, dadurch gekennzeichnet, daß oxidierte Anhydroglucoseeinheiten der Formel I zu wenigstens 25 Mol-% im Molekül enthalten sind.

12. Verfahren nach einem der Ansprüche 1 bis 11, dadurch gekennzeichnet, daß man es bei einem Druck im Bereich von 1 bar bis 3 bar durchführt und/oder als zu oxidierendes Polysaccharid Kartoffelstärke, Weizenstärke, Maisstärke und/oder Tapiokastärke einsetzt.

## Claims

1. A process for the production of polycarboxylic acids or salts thereof from polysaccharides by conversion of at least part of the primary alcohol groups of the polysaccharides into carboxyl groups under pressures of 0.5 bar to 12 bar and at a temperature in the range from the boiling point of the nitrogen dioxide under the particular pressure to 160°C and optionally at least partial neutralization of the carboxylic acid groups formed by oxidation in a fluidized bed of which the fluidizing medium is a gas containing nitrogen dioxide, the nitrogen dioxide is used in a quantity of at least 2 mole equivalents, based on the alcohol groups to be oxidized and totalled over the reaction time, and the fluidizing medium is circulated and reoxidation of the nitrogen dioxide is carried out in a second reaction zone of the circulation system, characterized in that several fluidized bed reactors are arranged in tandem, fluidized bed reactors alternating with places for reoxidizing the nitrogen dioxide.

2. A process as claimed in claim 1, characterized in that at least 15% of the primary alcohol groups of the polysaccharides are converted into carboxyl groups.

3. A process as claimed in claim 1 or 2, characterized in that nitrogen dioxide, based on the alcohol groups to be oxidized and totalled over the reaction time, is used in a quantity of 3 mole equivalents to 50 mole equivalents.

4. A process as claimed in any of claims 1 to 3, characterized in that 25% to 100% of the primary alcohol groups of the polysaccharides are converted into carboxyl groups and/or nitrogen dioxide, based on the alcohol groups to be oxidized and totalled over the reaction time, is used in a quantity of 4 mole equivalents to 20 mole equivalents,

5. A process as claimed in any of claims 1 to 4, characterized in that the fluidizing medium contains gaseous-oxygen-transferring oxidizing agent and/or an inert gas.

6. A process as claimed in claim 5, characterized in that the concentration of nitrogen dioxide is 10% by volume to 98% by volume.

7. A process as claimed in any of claims 1 to 6, characterized in that the fluidizing medium contains oxygen as the gaseous oxygen-transferring oxidizing agent and/or nitrogen as the inert gas and/or the concentration of nitrogen dioxide is 20% by volume to 90% by volume.

8. A process as claimed in claim 5, characterized in that it is carried out under a pressure of 0.8 bar to 9 bar.

9. A process as claimed in any of claims 1 to 8, characterized in that starch is used as the polysaccharide to be oxidized.

10. A process as claimed in any of claims 1 to 9, characterized in that it is carried out over such a period that, on a statistical average, at least 15 mole-% of the oxidation product consists of oxidized anhydroglucose units corresponding to formula I:

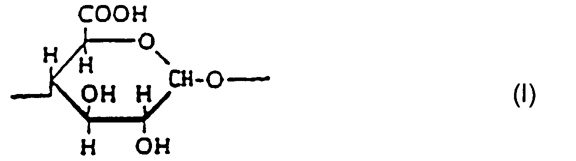

11. A process as claimed in claim 10, characterized in that preferably at least 25 mole-% of oxidized anhydroglucose units corresponding to formula I are present in the molecule.

12. A process as claimed in any of claims 1 to 11, characterized in that it is carried out under a pressure of 1 bar to 3 bar and/or potato starch, wheat starch, corn starch and/or tapioca starch is used as the polysaccharide to be oxidized.

## Revendications

1. Procédé de fabrication d'acides carboxyliques ou de leurs sels à partir de polysaccharides en transformant au moins une partie des groupes alcools primaires des polysaccharides en groupes carboxyles à des pressions de 0,5 bar à 12 bars et à une température comprise entre le point d'ébullition du peroxyde d'azote à la pression considérée jusqu'à 160°C, ainsi qu'éventuellement avec une neutralisation partielle le des groupes carboxyliques apparus par oxydation dans une couche fluidisée, dont l'agent fluidifiant est un gaz contenant du peroxyde d'azote, opération dans laquelle on utilise le peroxyde d'azote, par rapport aux groupes alcools à oxyder et au total dans toute la durée de la réaction, en une quantité d'au moins deux équivalents molaires, et en ce qu'on introduit le lit fluidisé dans le cycle et qu'on procède à une réoxydation du peroxyde d'azote dans une seconde zone de réaction du système cyclique,
caractérisé en ce qu'
on met les uns à la suite des autres plusieurs réacteurs en couche fluidisée, les réacteurs à lit fluidisé alternant avec des postes de réoxydation du peroxyde d'azote.

2. Procédé selon la revendication 1,
caractérisé en ce qu'
on transforme au moins 15 % des groupes alcools primaires des polysaccharides en groupes carboxyle.

3. Procédé selon la reverdication 1 ou 2,
caractérisé en ce qu'
on utilise le peroxyde d'azote, par rapport aux groupes alcools à oxyder et au total dans toute la durée de la réaction, en une quantité de 3 équivalents molaires à 50 équivalents molaires.

4. Procédé selon les revendications 1 à 3,
caractérisé en ce qu'
on transforme de 25 % à 100 % des groupes alcools primaires des polysaccharides en groupes carboxyle et/ou en ce qu'on utilise du peroxyde d'azote, par rapport aux groupes alcools à oxyder et au total pendant toute la durée de la réaction, en une quantité de 4 équivalents molaires à 20 équivalents molaires.

5. Procédé selon l'une des revendications 1 à 4,
caractérisé en ce que
le lit fluidisé contient un oxydant gazeux transporteur d'oxygène et/ou un gaz inerte.

6. Procédé selon la revendication 5,
caractérisé en ce que
la concentration en peroxyde d'azote s'élève à 10 % en volume à 98 % en volume.

7. Procédé selon l'une des revendications 1 à 6,
caractérisé en ce que
le lit fluidisé contient comme oxydant gazeux transporteur d'oxygène de l'oxygène et/ou comme gaz inerte de l'azote et/ou en ce que la concentration de peroxyde d'azote s'élève à 20 % à 90% en volume.

8. Procédé selon l'une des revendications 1 à 7,
caractérisé en ce qu'
on procède à une pression comprise entre 0,8 bar et 9 bars.

9. Procédé selon l'une des revendications 1 à 8,
caractérisé en ce qu'
on utilise l'amidon comme polysaccharide à oxyder.

10. Procédé selon l'une des revendications 1 à 9,
caractérisé en ce qu'
on procède pendant une durée telle que le produit d'oxydation en moyenne statistique consiste à au moins 15 % molaire en unités anhydroglucose oxydées de formule I

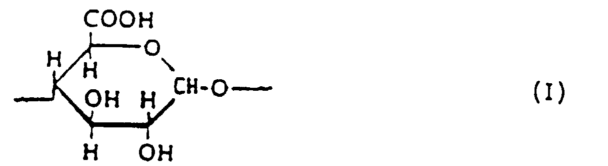

11. Procédé selon la revendication 10,
caractérisé en ce qu'
on trouve dans la molécule des unités anhydroglucose oxydées de formule I à au moins 25 % molaire.

12. Procédé selon l'une des revendications 1 à 11,
caractérisé en ce qu'
on procède à une pression comprise entre 1 bar et 3 bars et/ou en ce qu'on utilise comme polysaccharide à oxyder l'amidon de pomme de terre, l'amidon de blé, l'amidon de maïs et/ou l'amidon de tapioca.
